# DEMANDE DE BREVET EUROPEEN

(11) **EP 3 591 750 A1**
(43) Date de publication de la demande: **08.01.2020**
(21) Numéro de dépôt: 19184682.3
(22) Date de dépôt: 05.07.2019
(51) Int. Cl.: H01M 4/66, H01M 4/72, H01M 4/13, H01M 10/0525

(54) **COLLECTEUR DE COURANT À GRILLE ET DISPOSITIFS ET PROCÉDÉS ASSOCIÉS**

(30) Priorité: 05.07.2018 FR 1856207
(71) Demandeur: Armor, 44100 Nantes (FR)
(72) Inventeur: GUICHARD, Pierre, 44400 REZE (FR); BERTHOME, Simon, 85270 SAINT-HILAIRE-DE-RIEZ (FR)
(74) Mandataire: Lavoix

(57) **Abrégé**

La présente invention concerne un collecteur de courant (20) comportant :
- un substrat (22), le substrat (22) étant réalisé en un premier matériau, le premier matériau comportant un polymère, et
- une grille (24) en contact avec le substrat (22), la grille (24) étant réalisée en un deuxième matériau, le deuxième matériau comportant des particules métalliques.

## Description

### DOMAINE TECHNIQUE DE L'INVENTION

La présente invention concerne un collecteur de courant. L'invention se rapporte également à un ensemble, un accumulateur électrochimique ou un supercondensateur comportant un tel collecteur de courant. L'invention propose également des procédés de fabrication du collecteur de courant.

### ARRIERE-PLAN DE L'INVENTION

Un accumulateur électrochimique comprend classiquement au moins quatre éléments: une électrode positive, une électrode négative, un électrolyte, ainsi que des collecteurs de courant pour chaque électrode. L'ensemble d'une électrode négative et d'un collecteur de courant forme une anode tandis que l'ensemble d'une électrode positive et d'un collecteur de courant forme une cathode.

Le principe de fonctionnement de ces accumulateurs se base sur le stockage réversible de l'énergie électrique en énergie chimique par la mise en oeuvre de deux réactions électrochimiques séparées et couplées. Ce sont les électrodes positives et négatives, qui baignent dans l'électrolyte qui sont le siège des réactions électrochimiques, dites faradiques. Les électrodes sont notamment réalisées en des matériaux actifs permettant de stocker et de déstocker les ions via des réactions d'oxydation et de réduction.

Au cours de la décharge, le matériau actif à l'électrode négative s'oxyde et libère d'une part des électrons qui sont acheminés par l'intermédiaire du collecteur de courant vers le circuit extérieur et d'autre part des cations qui migrent au travers de l'électrolyte vers l'électrode positive. Ensuite, les électrons qui ont traversé le circuit qui en a utilisé l'énergie, et les cations sont captés par le matériau actif à l'électrode positive qui se réduit. La densité d'énergie qu'un accumulateur peut libérer est fonction à la fois du potentiel et de la capacité de la cellule électrochimique, tous deux étant directement reliés à la chimie du système. Le potentiel d'une batterie est déterminé par la différence entre les potentiels des réactions d'oxydoréduction se produisant simultanément aux électrodes positives et négatives.

Du fait du développement des batteries, pour de nombreuses applications, il est souhaitable d'améliorer la conductivité des batteries ainsi que leur tenue dans le temps.

Pour cela, la fabrication de chaque partie d'une batterie est améliorée.

Généralement, un collecteur de courant est réalisé en un matériau suffisamment conducteur pour assurer le transport électronique, léger, fin, mécaniquement résistant pour servir de substrat à l'électrode. Par exemple, le collecteur de courant est un feuillet métallique en fer, cuivre, aluminium, nickel, titane ou acier inoxydable ou autres alliages associés.

Toutefois, l'épaisseur des collecteurs métalliques est généralement limitée par leurs flexibilité et propriétés mécaniques lors des enductions et calandrage à grande échelle pour la réalisation d'électrodes d'accumulateurs ou supercondensateurs. De plus, de tels collecteurs peuvent casser, se froisser ou se déchirer dans ces conditions d'utilisation, ce qui rend leur fabrication délicate.

### RESUME DE L'INVENTION

Il existe un besoin pour des collecteurs de courant pour accumulateur dont la fabrication est plus aisée.

A cet effet, il est proposé un collecteur de courant comportant un substrat, le substrat étant réalisé en un premier matériau, le premier matériau comportant un polymère, et une grille en contact avec le substrat, la grille étant réalisée en un deuxième matériau, le deuxième matériau comportant des particules métalliques.

Suivant des modes de réalisation particuliers, le collecteur de courant comprend une ou plusieurs des caractéristiques suivantes, prise(s) isolément ou suivant toute combinaison techniquement possible :
- le deuxième matériau consiste en au moins des particules.
- le deuxième matériau comporte au moins un polymère et des particules.
- le deuxième matériau consiste en au moins un polymère et des particules.
- le deuxième matériau comporte au moins un liant et des particules.
- le deuxième matériau consiste en au moins un liant et des particules.
- le deuxième matériau comporte des particules dispersées dans au moins un liant.
- le deuxième matériau consiste en des particules dispersées dans au moins un liant.
- le deuxième matériau comporte au moins un élément choisi dans la liste constituée des métaux et alliages électriquement conducteurs, notamment l'or, l'argent, le cuivre, l'aluminium, le nickel, le palladium, le platine et le titane, et des oxydes métalliques tels que l'oxyde d'indium et d'étain, l'oxyde d'étain fluoré, l'oxyde d'étain et l'oxyde de zinc.
- la grille est la répétition d'un motif.
- le collecteur de courant comporte, en outre, une couche de revêtement, la couche de revêtement étant en contact avec la grille et formant un empilement de couches superposées avec le substrat le long d'une direction d'empilement.
- la couche de revêtement est réalisée selon une deuxième composition, la deuxième composition comportant un matériau conducteur et un matériau liant, le matériau conducteur comportant au moins un élément choisi dans la liste constituée du carbone, du noir de carbone, du graphite, du graphène, d'un nanotube de carbone, d'une fibre de charbon actif, d'une nanofibre de carbone non activée, d'un flocon métallique, d'une poudre métallique, d'une fibre métallique, et d'un polymère électriquement conducteur.
- la teneur en poids en matériau liant est supérieure ou égale à 30%, de préférence inférieure à 80%.
- la teneur en poids en matériau conducteur est supérieure ou égale à 20%, de préférence inférieure à 70%.
- le matériau liant consiste en un ou plusieurs polymères.
- l'ensemble de la couche de revêtement et de la grille présente une épaisseur inférieure ou égale à 15 micromètres, préférentiellement inférieure ou égale à 3 micromètres.
- l'empilement constitué par la grille et la couche de revêtement présente une épaisseur inférieure ou égale à 15 micromètres, préférentiellement inférieure ou égale à 3 micromètres.
- le premier matériau est choisi dans le groupe constitué d'un polymère comportant au moins une fonction amide, d'un polymère comportant au moins une fonction imide, d'un polymère comportant au moins une fonction imide et une fonction amide, du poly(éther-éther-cétone de phénylène), et du poly(naphtalate d'éthylène).

La présente description porte aussi sur un ensemble formant une anode ou une cathode comportant une électrode, et un collecteur de courant tel que décrit précédemment.

La présente description porte également sur un dispositif de stockage d'énergie électrique, accumulateur électrochimique ou supercondensateur, comportant un ensemble tel que décrit précédemment.

Il est aussi proposé un procédé de fabrication d'un collecteur de courant comportant ;
- une étape de fourniture d'un substrat, le substrat étant réalisé en un premier matériau, le premier matériau comportant un polymère, et
- une étape de dépôt d'une grille en contact avec le substrat, la grille étant réalisée en un deuxième matériau, le deuxième matériau comportant des particules métalliques.

Suivant des modes de réalisation particuliers, le procédé de fabrication comprend une ou plusieurs des caractéristiques suivantes, prise(s) isolément ou suivant toute combinaison techniquement possible :
- le procédé comporte une étape additionnelle de dépôt d'une couche de revêtement en contact avec la grille, la couche de revêtement étant réalisée par dépôt d'une composition comportant un matériau conducteur et un matériau liant.
- au moins une des étapes de dépôt est mise en oeuvre par une technique d'impression.

### BREVE DESCRIPTION DES DESSINS

D'autres caractéristiques et avantages de l'invention apparaîtront à la lecture de la description qui suit de modes de réalisation de l'invention, donnée à titre d'exemple uniquement, et faite en se référant aux dessins annexés, sur lesquels :
- la figure 1 est une vue schématique d'un exemple d'accumulateur ;
- la figure 2 est une vue schématique en coupe d'un exemple de collecteur de courant faisant partie d'un accumulateur représenté sur la figure 1 et comportant une grille ;
- les figures 3 à 8 sont des vues schématiques d'exemple de grilles du collecteur de courant de la figure 2 vues de haut, et
- la figure 9 est une vue schématique en coupe d'un autre exemple de collecteur de courant faisant partie d'un accumulateur représenté sur la figure 1.

### DESCRIPTION DETAILLEE DE MODES DE REALISATION

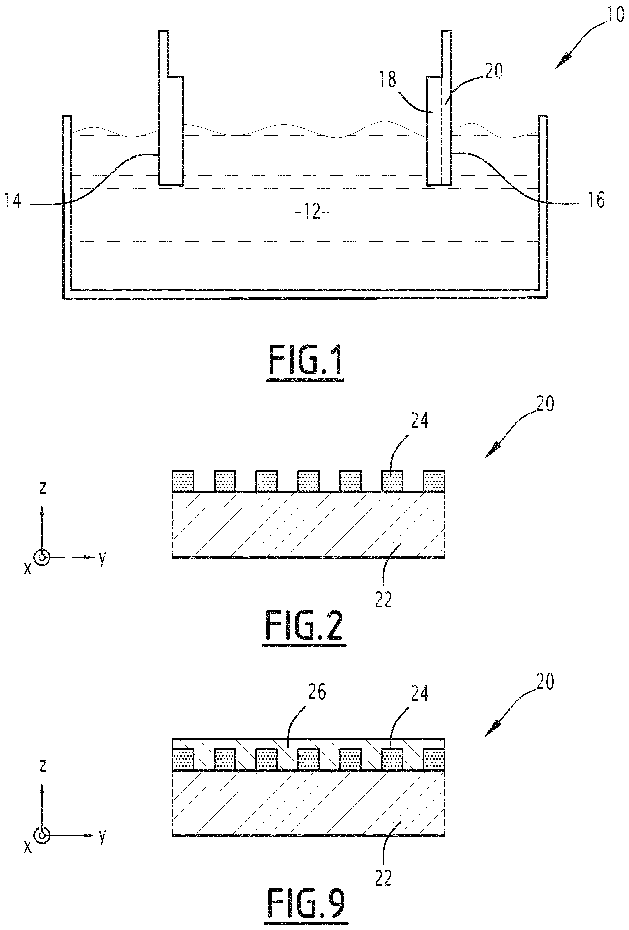

Un accumulateur électrique 10 est représenté sur la figure 1.

L'accumulateur 10 est destiné à être relié à d'autres accumulateurs électriques pour former un générateur électrique de tension et de capacité désirée. Un tel générateur est appelé batterie d'accumulateurs ou plus simplement une batterie.

Un accumulateur 10 utilise une technique de conversion réversible d'énergie pour stocker l'énergie et la restituer ultérieurement.

L'accumulateur 10 décrit utilisant une réaction électrochimique, l'accumulateur 10 est un accumulateur électrochimique.

Dans l'exemple proposé, l'accumulateur 10 est un accumulateur lithium-ion destiné à une batterie lithium-ion.

En variante, l'accumulateur 10 correspond à une autre technologie et est un accumulateur de type Plomb-Acide, Nickel-Cadmium (NiCd), Nickel-Métal Hydrure (NiMH), Nickel-Zinc (NiZn), Sodium-Soufre (Na-S), Sodium-ion (Na-ion), Lithium Métal Polymère (LMP), Lithium-Polymère (Li-Po), Lithium-Soufre (Li-S), ou Nickel-Lithium (Ni-Li). Une telle liste n'est pas limitative.

Dans le cas de la figure 1, l'accumulateur 10 comporte un électrolyte 12, une anode 14 et une cathode 16.

L'interaction entre l'électrolyte 12, l'anode 14 et la cathode 16 permet que l'accumulateur 10 fonctionne comme un accumulateur électrochimique.

L'électrolyte 12 est composé de différents sels ioniques apportant des ions servant aux réactions de stockage de charges ou faradique, de carbonates et d'un solvant ou mélange de solvant pour permettre la solubilisation des ions.

Dans un accumulateur lithium-ion, les sels ioniques sont, par exemple, le LiPF6 (Lithium hexafluorophosphate), le sel de Lithium bis (TriFluorométhane Sulfonyl) l'Imide (LiTFSI), le LiBF4 (Lithium tetrafluoroborate) et le LiBOB (lithium bis oxalate borate), le LiDFOB (Lithium Difluorooxalatoborate).

Les carbonates sont, par exemple, les carbonate de propylène (PC), carbonate d'éthylène (EC), carbonate de diméthyle (DMC), carbonate d'éthyle méthyle (EMC) ou carbonate de diéthyle (DEC).

On peut aussi trouver, en plus faible proportion, l'acétate de méthyle ou le formate de méthyle, l'acétonitrile, le tetrahydrofurane ou encore le gamma-butyrolactone, et des mélange binaire ou ternaire, voire même quaternaire de ceux-ci, ainsi que des liquides ioniques.

Dans la suite, seule la cathode 16 est plus spécifiquement décrite sachant que l'ensemble des éléments décrits sont également valable pour l'anode 14 en adaptant uniquement la composition de l'anode.

La cathode 16 comporte une électrode 18 et un collecteur de courant 20.

L'électrode 18 est une couche déposée sur le collecteur de courant 20.

L'électrode 18 est en contact avec l'électrolyte 12.

Un exemple de collecteur de courant 20 est représenté schématiquement sur la figure 2.

Le collecteur de courant 20 comporte un substrat 22 et une grille 24 en contact avec le substrat 22.

Le substrat 22 est une couche planaire, c'est-à-dire une couche s'étendant principalement dans un plan.

La direction perpendiculaire au plan est la direction d'empilement. La direction d'empilement est symbolisée par un axe Z sur la figure 2. Aussi, la direction d'empilement est notée direction d'empilement Z dans ce qui suit. Par commodité, il est défini également deux directions transverses correspondantes aux axes X et Y sur la figure 2, chacune des directions transverses étant perpendiculaires à la direction d'empilement Z et perpendiculaires entre elles. La première direction transverse X est perpendiculaire au plan de la figure 2 tandis que la deuxième direction transverse Y est dans le plan de la figure 2.

Par ailleurs, par définition, l'épaisseur d'une couche ou d'un élément est dans la suite de la description la dimension selon la direction d'empilement Z.

Le substrat 22 présente une épaisseur inférieure ou égale à 18 micromètres (µm).

Le substrat 22 est flexible.

Le terme « flexible » est à comprendre dans ce contexte comme signifiant que le substrat 22 est plus flexible qu'un substrat métallique.

Le substrat 22 est réalisé en un premier matériau M1.

Le premier matériau M1 comprend un polymère ou un mélange de polymères.

Dans la suite, par simplification, le terme « un polymère » est utilisé pour signifier aussi bien un unique polymère qu'un mélange de polymères.

Le premier matériau M1 est ou consiste en un polymère.

Dans certains modes de réalisation, le polymère est poreux.

En variante, le premier matériau M1 est du papier ou un tissu.

A titre d'exemple, le premier matériau M1 est du poly(téréphtalate d'éthylène) aussi dénommé sous le sigle PET.

Plus généralement, le premier matériau M1 est au moins un matériau choisi dans le groupe comprenant les composés suivants : polyacrylates (AA) ; acrylonitrile-butadiène-styrène (ABS) ; éthylène vinyle alcool (E/VAL) ; fluoroplastiques (PTFE), polyhexafluoroéthène propène (FEP) ; Perfluoroalkoxy (PFA), chlorotrifluoroéthylène (CTFE) ; polystyrène impact (HIPS : high impact polystyrène signifiant littéralement « polystyrène à haut impact ») ; melamine formaldehyde (MF) ; polymères cristaux-liquides (LCP) ; polyacétal (POM) ; acrylo nitrile (PAN) ; phénol-formaldéhyde plastique (PF) ; polyamide (PA) ; polyamide-imide (PAI) ; polyaryl éther cétone (PAEK) polyéther éther cétone (PEEK) ; cis 1,4-poly butadiène (PBD) ; trans 1,4-poly butadiène (PBD) ; poly 1-butène (PB) ; polybutylène téréphthalate (PBT) ; poly caprolactame ; poly carbonate (PC) ; polycarbonate/acrylonitrile butadiène styrène (PC/ABS) ; poly 2,6- 30 diméthyl-1,4-phénylène éther (PPE) ; polydicyclopentadiène (PDCP) ; polyester (PL) ; polyéther éther cétone (PEEK) ; poly étherimide (PEI) ; poly éthylène (PE), polyethylène à toutes densités : basse (LDPE), moyenne (MDPE), haute (HDPE), très haute (UHDPE) ; polyéthylènechlorinates (PEC) ; poly(éthylène glycol) (PEG) ; poly éthylène hexaméthylène dicarbamate (PEHD) ; poly éthylène oxide (PEO) ; polyéthersulfone (PES) ; poly éthylène sulphide (PES) ; poly éthylène téréphthalate (PET) ; phenolics (PF) ; poly hexaméthylène adipamide (PHMA) ; poly hexaméthylène sebacamide (PHMS) ; polyhydroxyéthylméthacrylate (HEMA); poly imide (PI tel que le KAPTON) ; poly isobutylène (PM) ; polycétone (PK) ; polylactic acide (PLA) ; poly méthyl méthacrylate (PMMA) ; poly méthyl pentène (PMP) ; poly m-méthyl styrène (PMMS) ; poly p-méthyl styrène (PPMS) ; poly oxyméthylène (POM) ; poly pentaméthylène hexaméthylène dicarbamate (PPHD) ; poly mphénylène ; isophthalamide (PMIA) ; poly phénylène oxide (PPO) ; poly p-phénylène sulphide (PPS) ; poly p-phénylène téréphthalamide (PPTA) ; polyphthalamide (PTA) ; poly propylène (PP) ; poly propylène oxide (PPDX) ; poly styrène (PS) ; polysulfone (PSU) ; poly tétrafluoro éthylène (PTFE) ; poly(triméthy1ène téréphthalate) (PTT) ; poly polyuréthane (PU) ; polyvinyl butyral (PVB) ; poly chlorure de vinyle (PVC) ; poly chlorure de vinylidène (PVDC) ; poly fluorure de vinylidène (PVDF) ; poly vinyl méthyl éther (PVME) ; poly(vinyl pyrrolidone) (PVP) ; silicone (SI) ; résine styrène- acrylonitrile (SAN) ; élastomères thermoplastiques (TPE) ; polymères thermoplastiques (TP), et urea-formaldéhyde (UF).

Avantageusement, le premier matériau M1 est utilisable pour des températures allant jusqu'à 160°C.

L'emploi d'autres premiers matériaux M1 permet de renforcer une telle propriété de stabilité à la température, par exemple jusqu'à une température de 300°C.

Par exemple, le premier matériau M1 est un polymère comportant au moins une fonction amide et/ou au moins une fonction imide.

D'un point de vue fonctionnel, la grille 24 sert de réseau conducteur.

Structurellement, la grille 24 est un élément délimitant des zones intérieures.

Selon l'exemple illustré, les zones correspondent à des trous.

En variante, les zones sont réalisées dans le même matériau que la grille 24 et présentent une épaisseur moindre que la grille 24.

La grille 24 est un pavage d'un motif élémentaire, c'est-à-dire la répétition d'un motif élémentaire sur toute l'étendue de la grille 24.

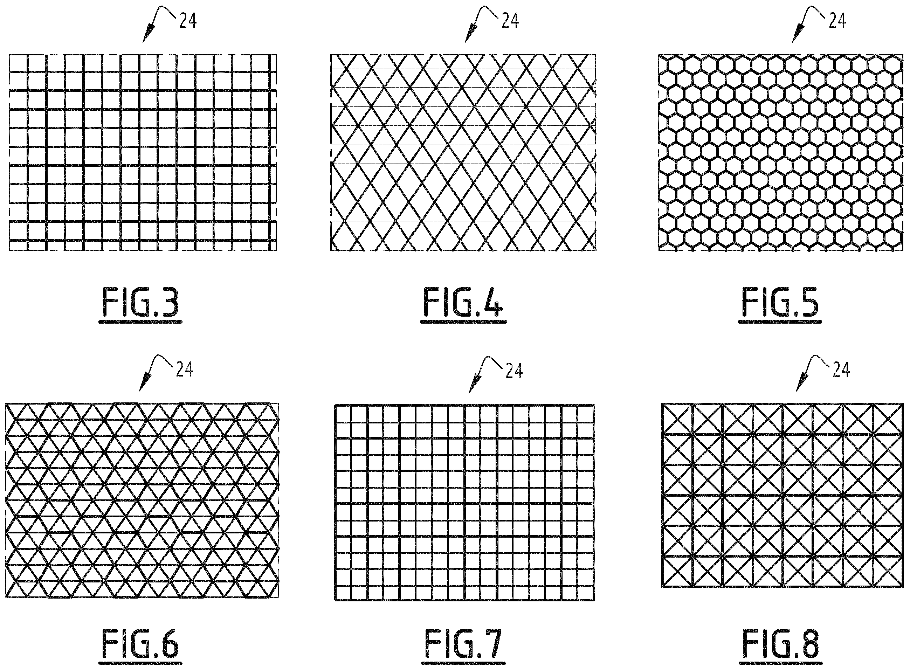

Plusieurs formes de grilles 24, et en particulier plusieurs motifs élémentaires, sont envisageables en référence aux figures 3 à 8.

Le motif élémentaire de la figure 3 est un carré, le motif élémentaire de la figure 4 est un triangle, le motif élémentaire de la figure 5 est une alvéole, le motif élémentaire de la figure 6 est une alvéole dont les sommets opposés sont reliés par des segments le motif élémentaire de la figure 7 est un carré dont les milieux des côtés opposés sont reliés par des segments et le motif élémentaire est un carré muni de diagonales.

Plus généralement, le motif élémentaire est un ensemble fini de points dont certains points sont reliés par des segments.

La grille 24 présente une épaisseur inférieure ou égale à 15 micromètres, avantageusement inférieure à 5 micromètres, de préférence inférieure à 3 micromètres.

La grille 24 est réalisée en un deuxième matériau M2.

La grille 24 est déposée sous forme d'une encre liquide ou première composition C1.

La grille 24 est ainsi déposée sur le substrat 22.

Ladite première composition C1 comporte le deuxième matériau M2 (le deuxième matériau M2 pouvant être en présence d'éléments additionnels comme des liants, l'ensemble formant la première composition C1) qui est choisi parmi :
- les métaux et alliages électriquement conducteurs, notamment l'or, l'argent, le cuivre, l'aluminium, le nickel, le palladium, le platine, le titane, le fer, le zinc, le manganèse, le chrome, le vanadium, ou Inox ; et
- les oxydes métalliques tels que l'oxyde de cuivre, d'aluminium, d'indium et d'étain, l'oxyde d'étain fluoré, l'oxyde d'étain et l'oxyde de zinc ou un mélange de ceux-ci.

Selon l'exemple décrit, la première composition C1 comprend des particules métalliques.

De telles particules peuvent présenter tout type de formes. De préférence, les particules sont sphériques.

Pour chaque particule, il est défini un diamètre comme la distance maximale entre deux points de la surface de la particule.

Le diamètre est, par exemple, mesuré par une technique de granulométrie laser.

La technique de mesure de la granulométrie par diffraction laser mesure la distribution granulométrique des particules en mesurant la variation angulaire de l'intensité lumineuse diffusée lorsqu'un faisceau laser traverse un échantillon de particules dispersées. Les grosses particules diffusent la lumière à de petits angles par rapport au faisceau laser et les petites particules diffusent la lumière à des angles supérieurs.

Parmi les particules de la première composition C1, le diamètre de chaque particule est inférieur ou égal à 100 µm.De préférence, les particules sont des nanoparticules.

Les nanoparticules sont des particules dont chaque dimension est inférieure à 100 nanomètres.

La première composition C1 est déposée sur le substrat 22 par des méthodes d'impression comprenant notamment la sérigraphie, la flexographie, l'héliogravure, l'offset ou le jet d'encre, qui permet d'enduire des compositions à base de particules métalliques.

Le fonctionnement de l'accumulateur 10 est conforme au fonctionnement d'un accumulateur électrochimique de l'état de la technique.

De manière synthétique, le collecteur 20 est formé d'un substrat 22 relativement fin de polymère et d'une couche conductrice de nanoparticules métalliques sous forme d'une grille 24 avec une épaisseur relativement faible.

Il en résulte qu'un tel collecteur 20 permet une économie de matière déposée sur le substrat 22, ce qui permet de diminuer la masse.

Le gain en masse provient aussi du substrat 22 qui est un matériau polymère au lieu d'un feuillard métallique. En effet, la masse volumique d'un métal est au moins deux fois supérieure à la masse volumique d'un matériau polymère. Par exemple, la masse volumique du cuivre est de 8.9 g/cm³ (grammes par centimètres cube) alors que la masse volumique du PET est de 1.3 g/cm³.

Cela permet d'obtenir un collecteur 20 plus fin, plus léger et plus souple que les collecteurs de courant standards tout en conservant une bonne conductivité électrique du collecteur 20.

En outre, la souplesse apportée par l'utilisation d'un substrat polymère imprimé permet d'envisager un substrat plus fin et plus résistant aux contraintes liées à son utilisation.

L'utilisation de particules métalliques permet aussi de réduire la masse car la densité en métal est moins grande dans le composition C1.

En outre, il en résulte une épaisseur réduite pour la grille 24, notamment par rapport à des feuillets métalliques déposables et assez conducteurs qui ne présentent pas une épaisseur inférieure à 3 µm.

Toujours par rapport à un feuillet métallique, le mode de dépôt proposé et l'utilisation de particules métalliques offre une plus grande flexibilité. D'un part, plusieurs motifs à forme ou maillage différents sont envisageables pour la grille 24 et d'autre part, plus de types de matériaux et compositions C1 sont accessibles.

Cela permet d'envisager d'optimiser les propriétés du collecteur de courant 20, notamment en termes de conductivité, d'adhésion au substrat 22 ou de poids par une simple variation des propriétés de la grille 24.

Il est à noter d'ailleurs que le ou les liants formant le matériau liant servant à lier les particules métalliques permet aussi de faciliter l'adhésion de la grille 24 sur le substrat 22.Ainsi, il pourrait être obtenu un collecteur de courant 20 adapté pour fonctionner à une plus haute densité d'énergie.

Cette propriété a été démontrée expérimentalement par la demanderesse comme cela apparaît dans la section « expériences ».

Par ailleurs, un tel collecteur est aisé à fabriquer. Cela apparaît notamment en décrivant un exemple de mise en oeuvre d'un exemple de procédé de fabrication du collecteur 20.

Le procédé de fabrication comporte le dépôt de la grille sur le substrat par utilisation d'une technique d'impression, notamment la sérigraphie rotative.

Un autre exemple de collecteur de courant 20 est illustré par la figure 9.

Le collecteur de courant 20 comporte également un substrat 22 et une grille 24.

Les remarques relatives au substrat 22 et à la grille 24 du collecteur de courant 20 de la figure 2 s'appliquent également pour le substrat 22 et la grille 24 du collecteur de courant 20 de la figure 9. Ces remarques ne sont pas répétées dans ce qui suit.

Le collecteur de courant 20 comporte, en outre, une couche de revêtement 26, la couche de revêtement 26 étant en contact avec la grille 24 et formant un empilement de couches superposées avec le substrat 22 le long d'une direction d'empilement Z.

La couche de revêtement 26 présente une épaisseur inférieure ou égale à 10 µm, avantageusement inférieure à 5 µm, préférentiellement inférieure à 2 µm.

Dans certains cas, la couche de revêtement 26 présente une épaisseur inférieure à l'épaisseur de la grille 24 de sorte que la grille 24 est apparente.

L'empilement constitué par la grille 24 et la couche de revêtement 26 superposées, cet empilement présente une épaisseur inférieure ou égale à 15 µm, préférentiellement inférieure à 3 µm.

La couche de revêtement 26 est réalisée selon une deuxième composition C2.

La deuxième composition C2 comporte un matériau conducteur MC et un matériau liant ML.

En variante, la deuxième composition C2 consiste en un matériau conducteur MC et un matériau liant ML.

Le choix du matériau liant ML peut varier considérablement tant que le matériau liant ML est inerte par rapport aux autres matériaux de la deuxième composition C2.

Le matériau liant ML comprend un ou plusieurs polymères choisis parmi les polymères thermoplastiques, les polymères thermodurcissables, les élastomères et les mélanges de ceux-ci.

Des exemples de polymères thermoplastiques comprennent, de manière non limitative : les polymères issus de la polymérisation de monomères vinyliques aliphatiques ou cycloaliphatiques, tels que des polyoléfines (parmi lesquels les polyéthylènes ou encore les polypropylènes) ; les polymères issus de la polymérisation de monomères vinyliques aromatiques, tels que les polystyrènes, les polymères issus de la polymérisation de monomères acryliques et/ou (méth)acrylates ; les polyamides ; les polyéthercétones ; les polyimides ; les alcools polyvinyliques ; les polymères fluorés, et le polyacrylonitrile.

Des exemples de polymères thermodurcissables comprennent, de manière non limitative des résines thermodurcissables (telles que des résines époxydes, des résines polyesters) éventuellement en mélange avec des polyuréthanes ou avec des polyéthers polyols ou vice versa.

Des exemples de polymères élastomères, comprennent, de manière non limitative les caoutchoucs naturels, les caoutchoucs de synthèse, les copolymères styrène-butadiène (connus également sous l'abréviation « SBR »), les copolymères éthylène-propylène (connus également sous l'abréviation « EPM »), les silicones.

Le matériau liant ML comprend ou est un mélange de polymère(s) thermoplastique(s), de polymère(s) thermodurcissable(s) et/ou de polymère(s) élastomères.

D'autres matériaux liants ML appropriés comprennent des polymères réticulés, tels que ceux fabriqués à partir de polymères ayant des groupes carboxyle et des agents de réticulation.

Il est à noter que les remarques qui viennent d'être faites pour le matériau liant ML de la deuxième composition C2 sont également valables pour le cas où la première composition C1 comporte des particules métalliques et un matériau liant (ou liant) y compris dans le mode de réalisation où la couche de revêtement 26 est absente.

Notamment, le matériau liant d'une telle première composition C1 comprend un ou plusieurs polymères choisis parmi les polymères thermoplastiques, les polymères thermodurcissables, les élastomères et les mélanges de ceux-ci.

La teneur en matériau liant ML est supérieure ou égale à 30% en poids. La teneur en poids d'un élément X dans un mélange est le ratio entre le poids de l'élément X et le poids de l'ensemble des éléments du mélange.

De préférence, la teneur en matériau liant ML est inférieure ou égale à 80% en poids.

Avantageusement, la teneur en matériau liant ML est comprise entre 40% en poids et 70% en poids.

Le matériau conducteur MC comporte un ou plusieurs type(s) d'éléments conducteurs pour améliorer la conductivité électronique.

Des exemples d'éléments conducteurs comprennent, de façon non limitative, les carbones conducteurs, le noir de carbone, les graphites, graphènes, nanotubes de carbone, les fibres de charbon actif, les nanofibres de carbone non activées (une nanofibre est une fibre pour laquelle au moins une dimension est inférieure à 1 µm), les flocons métalliques, les poudres métalliques, les fibres métalliques et les polymères électriquement conducteurs.

La teneur en deuxième matériau conducteur MC est supérieure ou égale à 20% en poids.

De préférence, la teneur en deuxième matériau conducteur MC est inférieure ou égale à 70% en poids.

Avantageusement, la teneur en deuxième matériau conducteur MC est comprise entre 30% en poids et 60% en poids.

Le fonctionnement du collecteur de courant 20 selon le deuxième mode de réalisation est similaire au fonctionnement du collecteur de courant 20 selon le premier mode de réalisation.

La couche de revêtement 26 est une couche destinée à protéger la grille 24.

Plus précisément, la couche de revêtement 26 évite la dégradation des particules métalliques au contact de composants corrosifs comme l'électrolyte, les charges actives ou les solvants.

Cela permet également en particulier d'empêcher la dissolution des particules métalliques dans les autres composants de l'accumulateur.

D'autre part, la couche de revêtement 26 permet d'améliorer l'adhésion et l'interface entre la couche de matière active et le collecteur de courant 20.

L'amélioration d'un tel contact permet d'augmenter la conductivité électrique de l'électrode. Cela implique qu'il devient possible de réduire encore plus l'épaisseur ou d'augmenter la surface des zones intérieures de la grille 24, résultant en une diminution de la quantité de matériaux impliqués dans la fabrication du collecteur 20 et une réduction du coût de fabrication.

Il est également à noter que la capacité de protection de la couche de revêtement 26 permet d'envisager des matériaux pour la grille 24 qui n'aurait pas pu être utilisés en l'absence de la couche de revêtement 26 du fait du risque de corrosion.

Il est alors possible de bénéficier des avantages additionnels procurés par l'emploi de particules métalliques présentant des propriétés améliorées.

Il est également envisageable de proposer que la grille 24 soit réalisée avec une pluralité de matériaux métalliques, ce qui permet de diminuer le coût de revient des matières tout en conservant, voire améliorant, la conductivité électrique du collecteur de courant 20.

L'emploi de la couche de revêtement 26 rend également possible la réalisation de la grille 24 en particules métalliques enrobées ou plaquées par un autre métal. Un exemple particulier est des particules d'aluminium ou de cuivre enrobées d'argent. De telles particules métalliques présentent une conductivité électrique améliorée.

Un tel collecteur 20 est aisé à fabriquer comme cela apparaît en décrivant un exemple de mise en oeuvre d'un exemple de procédé de fabrication du collecteur 20.

Le procédé de fabrication comporte, en outre, des étapes précédentes, une étape supplémentaire de formation de la couche de revêtement 26.

L'étape de formation comporte une étape de fourniture d'une deuxième composition C2 et une étape d'enduction.

L'étape de formation est, par exemple, réalisée par une technique d'enduction de la deuxième composition C2 appliquée au substrat 22 muni de la grille 24. L'étape de formation de la couche de revêtement 26 est de préférence formée par une technique d'enduction ou d'impression au déroulé par voie humide, notamment choisie parmi le slot-die, l'héliogravure, la sérigraphie et la flexographie.

Le procédé de fabrication est rapide et économique.

D'autres modes de réalisation sont envisageables.

En variante, le collecteur de courant 20 fait partie d'un supercondensateur au lieu d'un accumulateur électrochimique.

En particulier, le supercondensateur est un supercondensateur à électrolyte aqueux, organique et liquide ionique.

Plus généralement, le collecteur de courant 20 est avantageusement utilisé dans un dispositif de stockage d'énergie électrique.

### EXPERIENCES

Des expériences ont été menées par la demanderesse pour comparer deux collecteurs de courant.

Le premier collecteur de courant est un collecteur de courant comportant un feuillet d'aluminium présentant une épaisseur de 20 µm enduit d'une couche de revêtement. La couche de revêtement est réalisée en un matériau à base de carbone. Plus précisément, le matériau de la couche de revêtement comporte 70% en poids de polymère thermoplastique et 30% en poids de noir de carbone. L'épaisseur de la couche de revêtement après séchage du revêtement est comprise entre 1 µm et 1,5 µm.

Le premier collecteur de courant est dépourvu de grille.

Le deuxième collecteur de courant 20 est conforme au collecteur de courant 20 selon la figure 9.

Le premier matériau M1 du substrat 22 est du PET. L'épaisseur du substrat 22 est de 18 µm.

La grille 24 est réalisée avec le motif de la figure 8. Le deuxième matériau M2 est une encre comportant 50 à 60% en poids de nanoparticules d'argent et un liant

La deuxième composition C2 est identique à la composition utilisée pour former la couche de revêtement dans le cas du premier collecteur de courant.

La grille 24 et la couche de revêtement 26 présentent une épaisseur de 3,5 µm. Avec chacun des collecteurs de courant, il est formé une cellule électrochimique.

La première cellule électrochimique est ainsi formée du premier collecteur de courant, d'une électrode positive, d'un séparateur, d'une électrode négative, d'un collecteur de courant en aluminium.

Similairement, la deuxième cellule électrochimique est formée du deuxième collecteur de courant, d'une électrode positive, d'un séparateur, d'une électrode négative, d'un collecteur de courant en aluminium.

Dans chacun des cas, l'électrode positive est réalisée à partir d'un matériau actif revêtu de carbone et d'un liant. Le matériau actif est du LiFePO₄ revêtu de carbone noir et le liant est du poly(fluorure de vinylidène) aussi connu sous l'abréviation PVDF.

Le séparateur est une membrane en polypropylène. La membrane est imprégnée d'un électrolyte Lithium hexafluorophosphate dans du carbonate d'éthylène et du carbonate de diéthyl (aussi appelé sous l'abréviation LiPF6 EC DEC.

L'électrode négative est réalisée en Li₄Ti₅O₁₂(LTO).

Le collecteur de courant en aluminium est réalisé sous forme d'un feuillet.

Cela permet ainsi d'obtenir une première cellule électrochimique à comparer à une deuxième cellule électrochimique.

Chaque cellule électrochimique est de type sachet souche et est positionnée à l'intérieur d'un contenant de type enveloppe souple aluminisée

Les performances électrochimiques des deux cellules ont été caractérisées par un multipotentiostat VMP3 (Biologie).

Trois cycles de formation entre 2,05 Volts (V) et 1,0 V à la vitesse C/10 (C/*n* correspond au niveau de courant permettant de (dé)charger une batterie à sa capacité maximale en *n* heures) ont été réalisés afin de former la couche d'interphase électrolyte solide (aussi désignée sous l'abréviation SEI) sur l'électrode négative et de s'assurer que les deux électrodes soient entièrement fonctionnelles. La vitesse C/10 a été calculée en utilisant la capacité théorique.

Ensuite, les deux cellules ont été recyclées à 50% d'état de charge (souvent désigné sous l'acronyme « SOC » qui désigne « state of charge ») et laissées au repos pendant 1 heure pour assurer un potentiel stable.

Les spectres de spectroscopie d'impédance électrochimique (aussi désigné par l'abréviation EIS) ont ensuite été enregistrés sur la gamme de fréquences comprise entre 500 kiloHertz (kHz) et 10 milliHertz (mHz), à une amplitude de 5 milliVolts (mV).

La spectroscopie d'impédance électrochimique est une technique utilisée pour étudier, entre autres, les phénomènes électrochimiques et physiques aux interfaces collecteur de courant / électrode / électrolyte de la cellule électrochimique.

La spectroscopie d'impédance électrochimique repose sur l'étude de la fonction de transfert de ces systèmes électrochimiques en régime stationnaire et linéaire. Pour se placer dans de telles conditions avec des systèmes non-linéaires, une perturbation de faible amplitude est appliquée autour du point de fonctionnement supposé quasi stationnaire (système à l'équilibre).

Dans les expériences menées par la demanderesse, les mesures d'impédance ont été réalisées en appliquant une perturbation sinusoïdale en potentiel d'une amplitude de 5 mV autour de la tension d'équilibre de la cellule électrochimique correspond à la différence de potentiel entre les deux électrodes quand la cellule est au repos.

Il est à noter que la représentation de l'impédance dans le plan de Nyquist permet de mettre en évidence les différents phénomènes mis en jeu dans les cellules étudiées.

En effet, les spectres d'impédances correspondent aux différentes contributions au sein d'une cellule électrochimique et sont ainsi le signe de l'existence de plusieurs phénomènes : résistance de contact résultant du montage de la cellule électrochimique et du collecteur de courant, résistance de transfert de charge ou diffusion des ions Li+ au sein des électrodes. Afin de comparer les résistances résultantes du collecteur de courant, l'écart entre deux points de fréquence différents correspondant à la largeur du demi-cercle obtenu par l'ensemble des contributions mentionnés ci-dessus est mesuré, ce qui permet d'obtenir une résistance aussi appelée impédance.

Ensuite, une étude de la capabilité de décharge a été effectuée en déchargeant les cellules entre C/10 et C, la charge des cellules a été fixée au même régime que la décharge respectivement.

Le protocole expérimental a conduit aux résultats qui suivent.

La deuxième cellule possède une impédance plus faible (16,64 Ω.cm²) que celle de la première cellule (24,72 Ω.cm²). Comme l'électrolyte, la couche d'électrode positive et l'électrode négative sont identiques, seule la contribution du collecteur de courant 20 permet d'expliquer l'amélioration de l'impédance.

Par ailleurs, des mesures électriques ont été effectuées à partir des résultats de l'étude de capabilité entre C/10 et C.

Les valeurs obtenues sont reproduites dans ce qui suit :

| Cellule considérée | Densité puissance (W/grammes d'électrode) | Densité Energie (Wh/grammes d'électrode) |
|---|---|---|
| First cellule | 0,0099 | 0,1317 |
| | 0,0199 | 0,1198 |
| | 0,0497 | 0,0887 |
| | 0,0996 | 0,0437 |
| Deuxième cellule | 0,0119 | 0,1532 |
| | 0,0239 | 0,1388 |
| | 0,0599 | 0,0995 |
| | 0,1188 | 0,0526 |

Le tableau précédent (qui donne les valeurs du diagramme de Ragone) montre que la densité massique d'énergie est meilleure pour la deuxième cellule comparée à la première cellule. Cela met en évidence le gain apporté par la légèreté du collecteur de courant 10. L'avantage pourra être plus prononcé dans le cas de l'utilisation d'un collecteur de courant 10 à la fois en anode et en cathode.

Par ailleurs, les résultats démontrent l'amélioration des performances électrochimiques des cellules électrochimiques comprenant le collecteur de courant 10 induit par le gain en masse obtenu grâce au collecteur de courant 10.

## Revendications

1. Collecteur de courant (20) comportant :
- un substrat (22), le substrat (22) étant réalisé en un premier matériau (M1), le premier matériau (M1) comportant un polymère, et
- une grille (24) déposée sur le substrat (22), la grille (24) étant réalisée en un deuxième matériau (M2), le deuxième matériau (M2) comportant des particules métalliques.

2. Collecteur de courant selon la revendication 1, dans lequel le deuxième matériau (M2) comporte au moins un élément choisi dans la liste constituée de :
- les métaux et alliages électriquement conducteurs, notamment l'or, l'argent, le cuivre, l'aluminium, le nickel, le palladium, le platine et le titane ; et
- les oxydes métalliques tels que l'oxyde d'indium et d'étain, l'oxyde d'étain fluoré, l'oxyde d'étain et l'oxyde de zinc.

3. Collecteur de courant selon la revendication 1 ou 2, dans lequel la grille (24) est la répétition d'un motif.

4. Collecteur de courant selon l'une quelconque des revendications 1 à 3, dans lequel le collecteur de courant (20) comporte, en outre, une couche de revêtement (26), la couche de revêtement (26) étant en contact avec la grille (24) et formant un empilement de couches superposées avec le substrat (22) le long d'une direction d'empilement.

5. Collecteur de courant selon la revendication 4, dans lequel la couche de revêtement (26) est réalisée selon une deuxième composition (C2), la deuxième composition (C2) comportant un matériau conducteur (MC) et un matériau liant (ML), le matériau conducteur (MC) comportant au moins un élément choisi dans la liste constituée de :
- le carbone,
- le noir de carbone,
- le graphite,
- le graphène,
- un nanotube de carbone,
- une fibre de charbon actif,
- une nanofibre de carbone non activée,
- un flocon métallique,
- une poudre métallique,
- une fibre métallique, et
- un polymère électriquement conducteur.

6. Collecteur de courant selon la revendication 5, dans lequel la teneur en poids en matériau liant (ML) est supérieure ou égale à 30%, de préférence inférieure à 80%.

7. Collecteur de courant selon la revendication 5 ou 6, dans lequel la teneur en poids en matériau conducteur (MC) est supérieure ou égale à 20%, de préférence inférieure à 70%.

8. Collecteur de courant selon l'une quelconque des revendications 5 à 7, dans lequel le matériau liant (ML) consiste en un ou plusieurs polymères.

9. Collecteur de courant selon l'une quelconque des revendications 5 à 8, dans lequel soit l'ensemble de la couche de revêtement (26) et de la grille (24) présente une épaisseur inférieure ou égale à 15 micromètres, préférentiellement inférieure ou égale à 3 micromètres, soit l'empilement constitué par la grille (24) et la couche de revêtement (26) présente une épaisseur inférieure ou égale à 15 micromètres, préférentiellement inférieure ou égale à 3 micromètres.

10. Collecteur de courant selon l'une quelconque des revendications 1 à 9, dans lequel le premier matériau (M1) est choisi dans le groupe constitué :
- d'un polymère comportant au moins une fonction amide,
- d'un polymère comportant au moins une fonction imide,
- d'un polymère comportant au moins une fonction imide et une fonction amide,
- du poly(éther-éther-cétone de phénylène), et
- du poly(naphtalate d'éthylène).

11. Ensemble formant une anode ou une cathode comportant :
- une électrode, et
- un collecteur de courant (20) selon l'une quelconque des revendications 1 à 10.

12. Dispositif de stockage d'énergie électrique, accumulateur électrochimique ou supercondensateur, comportant un ensemble selon la revendication 11.f

13. Procédé de fabrication d'un collecteur de courant (20) comportant ;
- une étape de fourniture d'un substrat (22), le substrat (22) étant réalisé en un premier matériau (M1), le premier matériau (M1) comportant un polymère, et
- une étape de dépôt d'une grille (24) sur le substrat (22), la grille (24) étant réalisée en un deuxième matériau (M2), le deuxième matériau (M2) comportant des particules métalliques.

14. Procédé de fabrication d'un collecteur de courant (20) selon la revendication 13 comportant une étape additionnelle de dépôt d'une couche de revêtement (26) en contact avec la grille (24), la couche de revêtement (26) étant réalisée par dépôt d'une composition (C2) comportant un matériau conducteur (MC) et un matériau liant (ML).

15. Procédé de fabrication d'un collecteur de courant (20) selon la revendication 14, dans lequel au moins une des étapes de dépôt est mise en oeuvre par une technique d'impression.
